# EUROPEAN PATENT APPLICATION

(11) **EP 4 513 726 A1**
(43) Date of publication of application: **26.02.2025**
(21) Application number: 23860178.5
(22) Date of filing: 24.08.2023
(51) Int. Cl.: H02K 15/04

(54) **METHOD FOR MANUFACTURING STATOR AND DEVICE FOR MANUFACTURING STATOR**

(30) Priority: 31.08.2022 JP 2022137920
(71) Applicant: AISIN CORPORATION, Kariya-shi, Aichi 448-8650 (JP)
(72) Inventor: YAMAUCHI, Yoshiki, Kariya-shi, Aichi 448-8650 (JP)
(74) Representative: Kramer Barske Schmidtchen Patentanwälte PartG mbB
(86) International application number: PCT/JP2023/030532
(87) International publication number: WO 2024/048415

(57) **Abstract**

A method for manufacturing a stator includes an insertion step of inserting a plurality of segment coils into slots of a stator core, and a bending step of repeating, after the insertion step, a process in which a bending member that presses and bends a portion to be a coil end along the circumferential direction is relatively moved in a circumferential direction with respect to the stator core and relatively moved in an axial direction to bend the portion to be a coil end, and then bending is shifted to bending of the next portion to be a coil end adjacent to the bent portion to be a coil end by the bending member.

## Description

### TECHNICAL FIELD

The present invention relates to a method for manufacturing a stator and a device for manufacturing a stator.

### BACKGROUND ART

Conventionally, there have been known a method for manufacturing a stator and a device for manufacturing a stator enabling molding bending of segment coils arranged in slots of a stator core. Such method for manufacturing a stator and device for manufacturing a stator are disclosed in, for example, Japanese Patent No. 6848130.

Japanese Patent No. 6848130 discloses a method for manufacturing a stator including a step of pressing coil ends of segment coils arranged in a circumferential direction by a plurality of molding jigs to bend and mold the coil ends. The plurality of molding jigs whose number is the same as the total number of coil ends arranged in the circumferential direction are provided so as to be arranged in one row in the circumferential direction in a state of facing the individual coil ends. In the method for manufacturing a stator described above, by pressing each coil end by each of the plurality of molding jigs, all the coil ends are bend and molded simultaneously. That is, in the method for manufacturing a stator described above, the plurality of coil ends arranged in a circumferential shape are collectively and simultaneously bent and molded by the plurality of molding jigs arranged in a circumferential shape.

### CITATION LIST

### PATENT LITERATURE

Patent Literature 1: JP 6848130 B

### SUMMARY OF INVENTION

### TECHNICAL PROBLEMS

However, in the method (device) for manufacturing a stator described in Japanese Patent No. 6848130, since the plurality of coil ends arranged in a circumferential shape are collectively and simultaneously bent and molded, a molding load (reaction force from the plurality of coil ends) at the time of bending molding is excessively large, and a relatively large rigidity is required for a device that bends and molds the coil ends. For this reason, the device that bends and molds the coil ends is relatively large in size. In the manufacturing method (manufacturing device) of Japanese Patent No. 6848130, there is a limit to the reduction in diameter of a stator to be manufactured in consideration of interference between adjacent molding jigs and rigidity of the molding jig. In view of the above, conventionally, there has been a demand for improvement in order to suppress the size of the device that bends and molds the coil ends and to sufficiently handle the reduction in the diameter of the stator.

The present invention has been made to solve the above problems, and provides a method for manufacturing a stator and a device for manufacturing a stator capable of suppressing the size of a device that bends and molds a portion to be a coil end and sufficiently handling a reduction in diameter of a stator.

### SOLUTIONS TO PROBLEMS

In order to achieve the above object, a method for manufacturing a stator according to a first aspect of the invention includes an insertion step of inserting a plurality of segment coils into slots of a stator core so as to project a portion to be a coil end, which becomes a coil end portion, from an end surface of the stator core in an axial direction and to arrange a plurality of the portions to be coil ends in a circumferential direction of the stator core, and a bending step of performing, after the insertion step, bending molding of the plurality of portions to be coil ends arranged in the circumferential direction by repeating a process in which a bending member that presses and bends the portion to be a coil end along the circumferential direction is relatively moved in the circumferential direction with respect to the stator core and relatively moved in the axial direction to bend the portion to be a coil end, and then bending is shifted to bending of a next portion to be a coil end adjacent to the portion to be a coil end, which has been bent, by the bending member.

The method for manufacturing a stator according to the first aspect of the invention includes, as described above, the bending step of performing the bending molding of the plurality of portions to be coil ends arranged in the circumferential direction by repeating the process in which the bending member that presses and bends the portion to be a coil end along the circumferential direction is relatively moved in the circumferential direction with respect to the stator core and relatively moved in the axial direction to bend the portion to be a coil end, and then bending is shifted to bending of the next portion to be a coil end adjacent to the portion to be a coil end, which has been bent, by the bending member. As a result, the process in which after the portion to be a coil end is bent, bending is shifted to bending of the next portion to be a coil end adjacent to the portion to be a coil end, which has been bent, by the bending member is repeated, so that the bending molding of the plurality of portions to be coil ends can be performed by one bending member. Therefore, it is not necessary to perform collective bending molding of a plurality of portions to be coil ends as in the conventional case, and rigidity required for a device for bending and molding the portion to be a coil end can be reduced. In addition, since the bending molding of the plurality of portions to be coil ends adjacent to each other can be performed by one bending member, the bending molding of the portions to be coil ends arranged in the circumferential direction can be performed without providing the same number of the bending members as the total number of the portions to be coil ends arranged in the circumferential direction. Therefore, when the diameter of the stator to be manufactured is reduced, it is not necessary to consider interference between adjacent bending members as in the conventional case. As a result, it is possible to suppress the size of the device for bending and molding the portion to be a coil end and to sufficiently handle the reduction in the diameter of the stator.

In the method for manufacturing a stator according to the first aspect, the bending step preferably includes performing the bending molding of the plurality of portions to be coil ends by relatively moving the bending member, whose number is smaller than a total number of the plurality of portions to be coil ends arranged in the circumferential direction, in the circumferential direction with respect to the stator core and relatively moving the bending member in the axial direction.

With such a configuration, since bending molding is performed by the bending member whose number is smaller than the total number of the plurality of portions to be coil ends arranged in the circumferential direction, all the portions to be coil ends are not simultaneously bent, and the rigidity required for the device for bending and molding the portion to be a coil end can be effectively reduced. Therefore, the size of the device for bending and molding the portion to be a coil end can be effectively suppressed. In addition, for example, in a case where two bending members are provided at an angular interval of 180° in the circumferential direction, a large interval between the two bending members can be ensured, so that it is possible to suppress interference between the bending members, and it is also possible to increase rigidity by manufacturing the bending member thick. As a result, it is possible to more reliably handle the reduction in the diameter of the stator.

In the method for manufacturing a stator according to the first aspect, the bending step preferably includes performing the bending molding of the plurality of portions to be coil ends by repeating a process in which the bending member is relatively moved in the circumferential direction with respect to the stator core and relatively moved in the axial direction to bend the portion to be a coil end along the circumferential direction and pass over the portion to be a coil end, and then bending is shifted to bending of a next portion to be a coil end adjacent to the portion to be a coil end, which has been bent, by the bending member.

With such a configuration, for example, as compared with a case where, after bending one portion to be a coil end, the bending member is temporarily retracted in the axial direction away from the stator core without passing over the one portion to be a coil end, and then bending is shifted to bending to the next adjacent portion to be coil end, the bending member can bend the portion to be a coil end along the circumferential direction while passing over the portion to be a coil end, so that it is possible to continuously and efficiently bend a plurality of portions to be coil ends adjacent to each other in the circumferential direction.

In this case, the bending step preferably includes performing the bending molding of the plurality of portions to be coil ends in a spiral manner by relatively moving the bending member simultaneously in the circumferential direction and the axial direction with respect to the stator core and causing the bending member to pass over the portion to be a coil end.

With such a configuration, only by setting the circumferential speed of the bending member and the axial speed of the bending member, the bending member can be moved in a spiral manner to easily perform the bending molding of the plurality of portions to be coil ends.

In the method for manufacturing a stator according to the first aspect, the bending step preferably includes performing the bending molding of the plurality of portions to be coil ends by turning the bending member in the circumferential direction of the stator core a plurality of times and gradually increasing a bending angle of the portion to be a coil end with respect to the axial direction.

With such a configuration, the bending molding of each portion to be a coil end can be performed a plurality of times, and the bending angle due to one press of the bending member against the portion to be a coil end can be reduced. Therefore, it is possible to prevent the bent portion to be a coil end from interfering with the next adjacent portion to be a coil end.

In a configuration in which the bending step includes the bending molding by the bending member whose number is smaller than a total number of the plurality of portions to be coil ends arranged in the circumferential direction, the bending step preferably includes simultaneously performing the bending molding of the plurality of portions to be coil ends, whose number is smaller than the total number of the plurality of portions to be coil ends arranged in the circumferential direction, by the bending member provided in plural at equal angular intervals in the circumferential direction, whose number is smaller than the total number.

With such a configuration, as compared with a case where there is only one bending member, the bending molding of more portions to be coil ends can be performed simultaneously, so that the bending molding of the plurality of portions to be coil ends can be efficiently performed.

A device for manufacturing a stator according to a second aspect of the invention includes a bending member that presses and bends a plurality of portions to be coil ends, which become a plurality of coil end portions, arranged in a circumferential direction of a stator core along the circumferential direction, and a moving mechanism that performs bending molding of the plurality of portions to be coil ends arranged in the circumferential direction by repeating a process in which the bending member is relatively moved in the circumferential direction with respect to the stator core and relatively moved in the axial direction of the stator core to bend the portion to be a coil end, and then bending is shifted to bending of a next portion to be a coil end adjacent to the portion to be a coil end, which has been bent, by the bending member, and a number of the bending members provided is smaller than a total number of the plurality of portions to be coil ends arranged in the circumferential direction.

The device for manufacturing a stator according to the second aspect of the invention includes, as described above, the moving mechanism that performs the bending molding of the plurality of portions to be coil ends arranged in the circumferential direction by repeating the process in which the bending member is relatively moved in the circumferential direction with respect to the stator core and relatively moved in the axial direction of the stator core to bend the portion to be a coil end, and then bending is shifted to bending of the next portion to be a coil end adjacent to the portion to be a coil end, which has been bent, by the bending member, and the number of the bending members provided is smaller than the total number of the plurality of portions to be coil ends arranged in the circumferential direction. As a result, the process in which after the portion to be a coil end is bent, bending is shifted to bending of the next portion to be a coil end adjacent to the portion to be a coil end, which has been bent, by the bending member is repeated, so that the bending molding of the plurality of portions to be coil ends can be performed by one bending member. Therefore, it is not necessary to perform collective bending molding of a plurality of portions to be coil ends as in the conventional case, and rigidity required for a device for bending and molding the portion to be a coil end can be reduced. In addition, since the bending molding of the plurality of portions to be coil ends adjacent to each other can be performed by one bending member, the bending molding of the portions to be coil ends arranged in the circumferential direction can be performed without providing the same number of the bending members as the total number of the portions to be coil ends arranged in the circumferential direction. Therefore, when the diameter of the stator to be manufactured is reduced, it is not necessary to consider interference between adjacent bending members as in the conventional case. As a result, it is possible to suppress the size of the device for bending and molding the portion to be a coil end and to sufficiently handle the reduction in the diameter of the stator.

In the method for manufacturing a stator described above, the following configuration is also conceivable.

### (Supplement 1)

That is, the bending step includes performing bending molding of a plurality of portions to be coil ends by alternately repeating the relative movement of the bending member only in the circumferential direction with respect to the stator core and the relative movement of the bending member only in the axial direction with respect to the stator core.

With such a configuration, the bending molding of the plurality of portions to be coil ends arranged in the circumferential direction can be performed by the bending member in a state where the position of the bending member in the axial direction is held. Therefore, the bending amounts of the plurality of portions to be coil ends can be made uniform by the bending member.

### BRIEF DESCRIPTION OF DRAWINGS

FIG. 1 is a perspective diagram illustrating a stator of an embodiment.
FIG. 2 is a schematic diagram for explaining a segment coil of the stator of the embodiment.
FIG. 3 is a perspective diagram illustrating a coil end portion of the stator of the embodiment.
FIG. 4 is a schematic diagram illustrating a device for manufacturing a stator according to the embodiment.
Fig. 5 is a diagram of a pressing member and a support member of the device for manufacturing a stator according to the embodiment when viewed from a circumferential direction.
FIG. 6 is a schematic diagram for explaining a spiral track for moving the pressing member and the support member of the device for manufacturing a stator according to the embodiment.
Fig. 7 is a diagram of the pressing member and the support member of the device for manufacturing a stator according to the embodiment when viewed from a radial direction.
FIG. 8 is a diagram illustrating a state where a portion to be a coil end in the outermost row in the radial direction is bent and molded in the circumferential direction by the pressing member of the device for manufacturing a stator according to the embodiment.
FIG. 9 is a perspective diagram illustrating a regulating member of the device for manufacturing a stator according to the embodiment.
FIG. 10 is a flowchart illustrating a manufacturing flow of the stator of the embodiment.
FIG. 11 is a diagram for explaining a segment coil preparing step in the manufacturing flow of the stator of the embodiment.
FIG. 12 is a diagram for explaining an insertion step in the manufacturing flow of the stator of the embodiment.
FIG. 13 is a plan view illustrating a state immediately before bending molding of the portion to be a coil end in the circumferential direction is started in a bending step of the manufacturing flow of the stator of the embodiment.
FIG. 14 is a plan view illustrating a state where the portion to be a coil end in the outermost row in the radial direction is bent and molded in the circumferential direction in the bending step of the manufacturing flow of the stator of the embodiment.
FIG. 15 is a plan view illustrating a state where the portions to be coil ends in the outermost row and the second row from an outer side in the radial direction are bent and molded in the circumferential direction in the bending step of the manufacturing flow of the stator of the embodiment.
FIG. 16 is a diagram for explaining an operation of bending each of a plurality of portions to be coil ends arranged in the circumferential direction little by little in a bending molding step of the manufacturing flow of the stator of the embodiment.
FIG. 17 is a schematic diagram for explaining a zigzag track for moving a pressing member and a support member of a device for manufacturing a stator according to a modification.

### DESCRIPTION OF EMBODIMENTS

Hereinafter, embodiments of the present invention will be described with reference to the drawings.

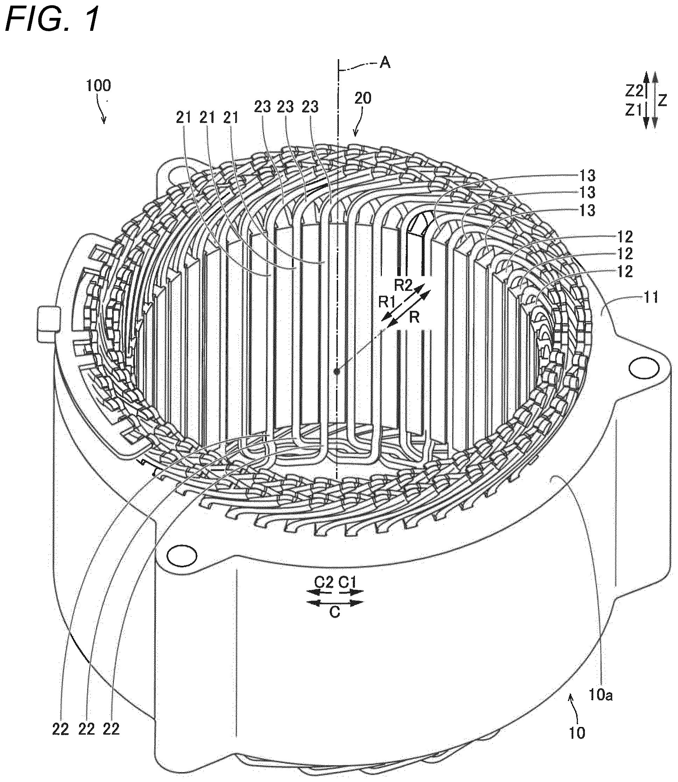

With reference to FIGS. 1 to 16, a configuration of a device 200 for manufacturing a stator 100 and a method for manufacturing the stator 100 according to an embodiment will be described. Hereinafter, the configuration of the stator 100 to be manufactured will be described, and then the configuration of the device 200 for manufacturing the stator 100 and the method for manufacturing the stator 100 will be described in order.

### (Configuration of Stator)

The configuration of the stator 100 will be described with reference to FIGS. 1 to 3.

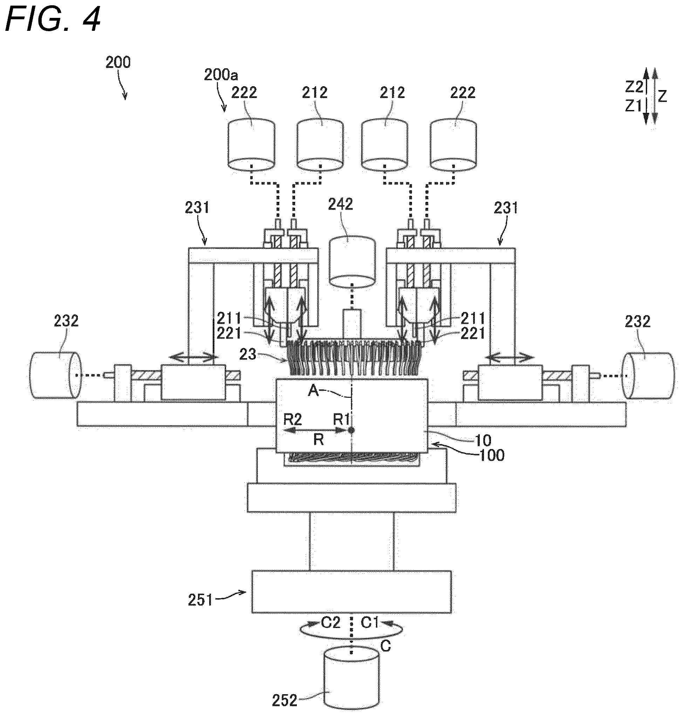

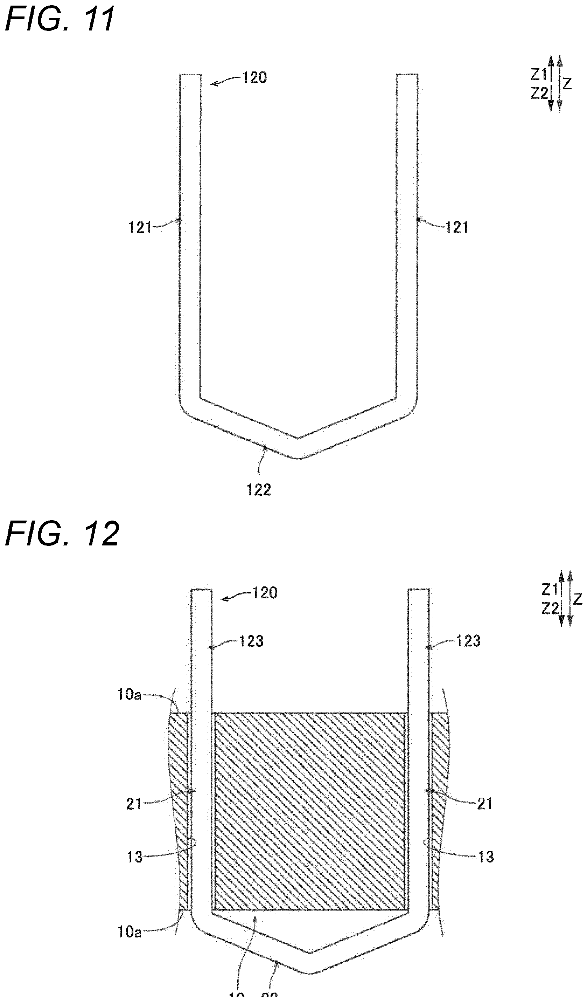

In the following description, the axial direction, the radial direction, and the circumferential direction of a stator core 10 (see FIG. 1) included in the stator 100 are defined as a Z direction, an R direction, and a C direction, respectively. One side and the other side in the axial direction (Z direction) are defined as a Z1 side and a Z2 side, respectively. An inner side and an outer side in the radial direction (R direction) are defined as an R1 side and an R2 side, respectively. One side and the other side in the C direction are defined as a C1 side and a C2 side, respectively. In the present embodiment, a bending molding step of bending and molding a portion 123 to be a coil end (see FIG. 12) to be described later is performed by the device 200 for manufacturing the stator 100 from the Z2 side of the stator core 10 (see FIG. 4).

As illustrated in FIG. 1, the stator 100 constitutes a part of an inner rotor type rotating electrical machine (not illustrated) together with a rotor (not illustrated) disposed on the R1 side of the stator 100 so as to face the stator 100. The rotating electrical machine is, for example, a motor, a generator, or a motor/generator.

The stator 100 includes the stator core 10 with a cylindrical shape with a central axis A along the Z direction as a central axis, and a coil 20.

The stator core 10 is formed by stacking a plurality of electromagnetic steel plates in the Z direction. The stator core 10 includes an annular back yoke 11 and a plurality of teeth 12 projecting from the back yoke 11 toward the R1 side. A slot 13 is formed between the teeth 12 adjacent to each other in the C direction. That is, the stator core 10 includes the plurality of slots 13. Each of the plurality of slots 13 is provided to extend in the Z direction.

The coil 20 is configured to generate a magnetic flux by being supplied with three-phase alternating current power. As an example, the coil 20 includes a conductive wire containing any one of copper, a copper alloy, aluminum, and an aluminum alloy as a main component, and an insulating film covering the conductive wire.

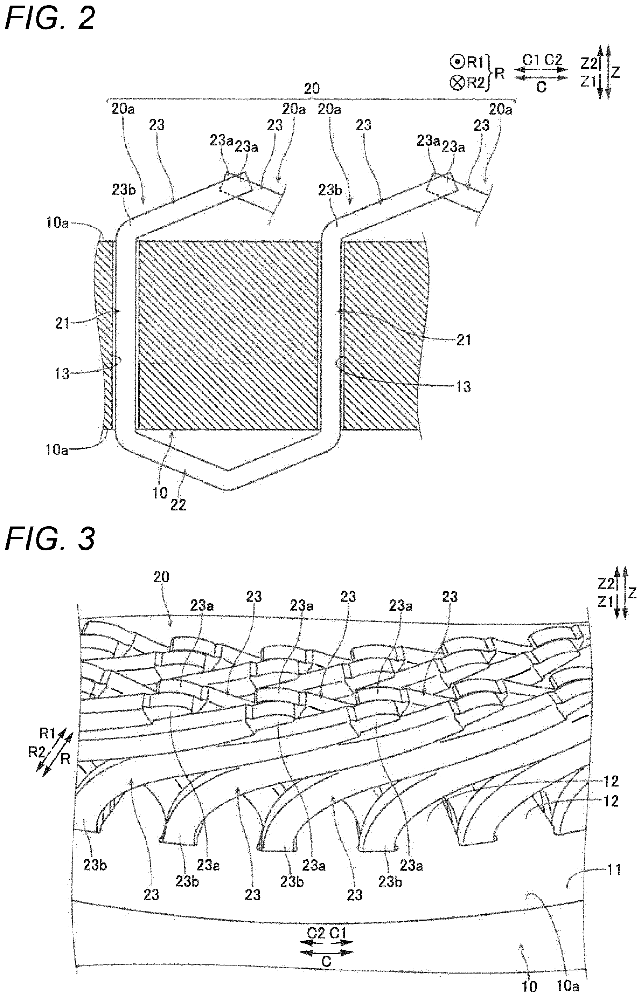

As illustrated in FIG. 2, the coil 20 is configured by joining a plurality of segment coils 20a. Each of the segment coils 20a includes a pair of slot housed portions 21 housed in the slots 13, a coil end portion 22 projecting from a Z1-side end surface 10a of the stator core 10 toward the Z1 side, and two coil end portions 23 projecting from a Z2-side end surface 10a of the stator core 10 (axial end surface of the stator core 10) toward the Z2 side.

The paired slot housed portions 21 are individually housed (inserted) in different slots 13. That is, the paired slot housed portions 21 are arranged to extend along the Z direction. The coil end portion 22 connects the pair of slot housed portions 21 to each other. As a result, in the individual segment coils 20a, a portion including the pair of slot housed portions 21 and the coil end portion 22 is formed in a U shape.

Each of the two coil end portions 23 is disposed on the Z2 side of the stator core 10. Each of the two coil end portions 23 is connected to a side opposite to the coil end portion 22 of each of the pair of slot housed portions 21. Each of distal end portions 23a of the two coil end portions 23 (on the side opposite to the slot housed portion 21) is joined (connected) to the distal end portion 23a of the coil end portion 23 of the other segment coil 20a by welding on the Z2 side of the stator core 10. As an example, the total number of the coil end portions 23 arranged in the circumferential direction is 48.

The drawing illustrates a state where, in order to connect each of the distal end portions 23a of the two coil end portions 23 to the distal end portion 23a of the coil end portion 23 of the other segment coil 20a by welding, an insulating film is not formed on each of the distal end portions 23a of the two coil end portions 23 (conductive wire is exposed). Although not illustrated, the distal end portion 23a of the coil end portion 23 is subjected to an insulation treatment with a resin member such as varnish after the distal end portion 23a of the coil end portion 23 of one segment coil is connected to the distal end portion 23a of the coil end portion 23 of the other segment coil 20a.

As illustrated in FIG. 3, each of the two coil end portions 23 is bent in the direction along the C direction with respect to the slot housed portion 21 extending in the Z direction with a root portion 23b of the coil end portion 23 as a bending fulcrum. As a result, each of the two coil end portions 23 extends obliquely with respect to the Z direction.

In the stator 100, the distal end portions 23a of the plurality of coil end portions 23 are arranged at substantially equal angular intervals along the C direction. A set of the distal end portions 23a of the plurality of coil end portions 23 arranged along the C direction is arranged along the R direction.

The plurality of coil end portions 23 (hereinafter, first-row coil end portions 23) in the first row from the R2 side, which are arranged along the C direction, are bent toward the C1 side along the C direction with respect to the slot housed portion 21 extending in the Z direction. The plurality of coil end portions 23 (hereinafter, second-row coil end portions 23) in the second row from the R2 side, which are arranged along the C direction, are bent toward the C2 side along the C direction with respect to the slot housed portion 21 extending in the Z direction. Each of the distal end portions 23a of the plurality of first-row coil end portions 23 and each of the distal end portions 23a of the plurality of second-row coil end portions 23 face each other in the R direction and are joined to each other. The configuration of the coil end portions 23 arranged on the R1 side with respect to the second-row coil end portion 23 is also substantially similar to the configuration of the first-row coil end portion 23 and the second-row coil end portion 23.

### (Device for Manufacturing Stator)

The device 200 for manufacturing the stator 100 according to the present embodiment will be described with reference to FIGS. 4 to 9.

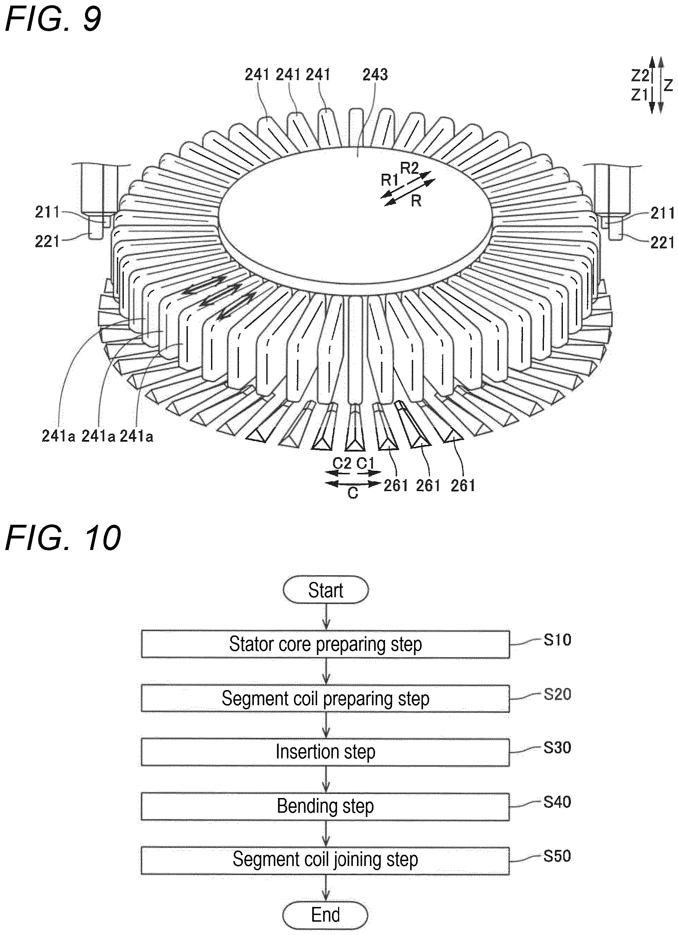

As illustrated in FIG. 4, the device 200 for manufacturing the stator 100 includes a pressing member 211 (an example of "bending member" in the claims), a pressing member motor 212, a support member 221 (an example of "bending member" in the claims), a support member motor 222, a support unit 231, a support unit motor 232, a regulating member 241 (see FIG. 9), a regulating member motor 242, a stator support portion 251, and a stator support portion motor 252.

The pressing member motor 212, the support member motor 222, the support unit motor 232, and the stator support portion motor 252 constitute a moving mechanism 200a that relatively moves the pressing member 211 and the support member 221 with respect to the stator core 10.

The moving mechanism 200a is configured to bend and mold the plurality of portions 123 to be coil ends arranged in the circumferential direction by repeating a process in which the pressing member 211 and the support member 221 are relatively moved in the circumferential direction (C direction) with respect to the stator core 10 and relatively moved in the axial direction (Z direction) of the stator core 10 to bend the portion 123 to be a coil end, and then bending is shifted to bending of the next portion 123 to be a coil end adjacent to the bent portion 123 to be a coil end by the pressing member 211 and the support member 221. Details of bending molding (bending step) will be described later.

The manufacturing device 200 includes a plurality of sets of the pressing members 211 and the support members 221, each set including one pressing member 211 and one support member 221. Although it is an example, the manufacturing device 200 of the present embodiment includes two sets of the pressing members 211 and the support members 221. The two sets of the pressing members 211 and the support members 221 are arranged at equal angular intervals (180° intervals) in the circumferential direction. In the manufacturing device 200, the pressing member 211 and the support member 221 (one set) are provided in a number (two sets) smaller than the total number (48) of the plurality of portions 123 to be coil ends arranged in the circumferential direction.

As described above, the manufacturing device 200 is configured that (two sets of) the pressing members 211 and the support members 221 provided in plural at equal angular intervals in the circumferential direction, whose number is smaller than the total number (48) of the plurality of portions 123 to be coil ends arranged in the circumferential direction, simultaneously bend and mold the plurality of (two) portions 123 to be coil ends whose number is smaller than the total number (48) of the portions 123 to be coil ends. If the molding load is compared with that of a manufacturing device that simultaneously bends and molds all of 48 portions to be coil ends, it is needless to mention that the manufacturing device 200 can suppress the molding load as small as possible.

The pressing member 211 and the support member 221 are configured to press and bend the plurality of portions 123 to be the plurality of coil end portions 23 arranged in the circumferential direction (C direction) of the stator core 10 along the circumferential direction.

The pressing member 211 is configured to be movable in the Z direction with respect to the stator core 10 by driving of the pressing member motor 212. That is, the pressing member 211 is configured to be relatively movable in the Z direction with respect to the stator core 10. In addition, the support member 221 is configured to be movable in the Z direction with respect to the stator core 10 by driving of the support member motor 222. That is, the support member 221 is configured to be relatively movable in the Z direction with respect to the stator core 10.

The support unit 231 supports the pressing member 211 and the support member 221. The support unit 231 is configured to be movable in the R direction with respect to the stator core 10 by driving of the support member motor 222. That is, the pressing member 211 and the support member 221 are configured to be relatively movable simultaneously in the R direction with respect to the stator core 10.

The stator support portion 251 supports the stator 100. The stator support portion 251 is configured to be rotatable in the C direction about the central axis A (see FIG. 1) of the stator core 10 by driving of the stator support portion motor 252. That is, the pressing member 211 and the support member 221 are configured to be simultaneously and relatively movable in the C direction with respect to the stator core 10.

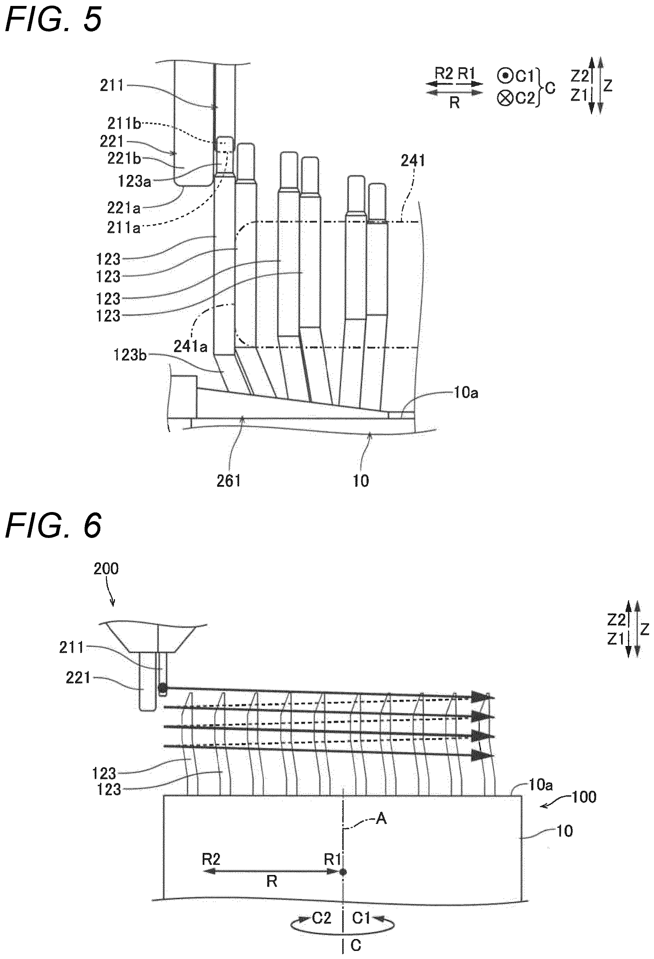

As illustrated in FIG. 5, the pressing member 211 is configured to press the distal end portion 123a of the portion 123 to be the coil end portion 23 that projects from the Z2-side end surface 10a of the stator core 10 and is arranged in the R direction in each of the plurality of slots 13 (see FIG. 1) of the stator core 10, thereby being capable of bending the portion 123 to be a coil end in the C direction.

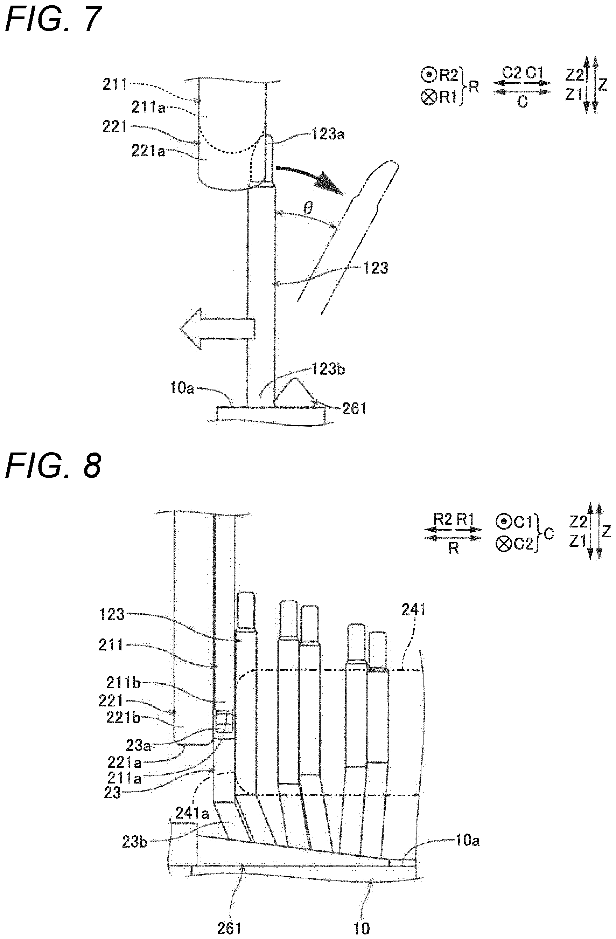

Specifically, the manufacturing device 200 is configured to bend and mold the plurality of portions 123 to be coil ends by turn the pressing member 211 and the support member 221 in the circumferential direction of the stator core 10 a plurality of times (for example, 20 turns) to gradually increase a bending angle θ (see FIG. 7) of the portion 123 to be a coil end with respect to the axial direction (Z direction).

The manufacturing device 200 is configured to bend and mold the plurality of portions 123 to be coil ends by repeating a process in which the pressing member 211 and the support member 221 are relatively moved in the circumferential direction and relatively moved in the axial direction with respect to the stator core 10 to bend the portion 123 to be a coil end along the circumferential direction and pass over the portion 123 to be a coil end, and then bending is shifted to bending of the next portion 123 to be a coil end adjacent to the bent portion 123 to be a coil end by the bending member. That is, the manufacturing device 200 is configured to continuously bend the plurality of portions 123 to be coil ends adjacent to each other without performing a restart operation such as temporarily retracting in the axial direction in order to bend the next adjacent portion 123 to be a coil end after bending one portion 123 to be a coil end.

In addition, the manufacturing device 200 (moving mechanism 200a) is configured to bend and mold the plurality of portions 123 to be coil ends by relatively moving the pressing member 211 and the support member 221 simultaneously in the circumferential direction and the axial direction with respect to the stator core 10 to pass over the portion 123 to be a coil end (see FIG. 6). That is, the manufacturing device 200 (moving mechanism 200a) is configured to gradually move the pressing member 211 and the support member 221 closer to the stator core 10 while continuously moving the pressing member and the support member on a track inclined in an oblique direction when viewed from the C direction.

As an example, each of the axial moving speed and the circumferential moving speed of the pressing member 211 and the support member 221 at that time is a substantially constant speed. Here, in the final stage in which the pressing member 211 approaches the stator core 10 side and bending molding is completed, the manufacturing device 200 sets the axial moving speed of the pressing member 211 to substantially zero (including zero) so that the bending angles θ (see FIG. 7) of the plurality of portions 123 to be coil ends arranged in the circumferential direction are the same.

As illustrated in FIG. 5, the support member 221 is disposed on the R2 side of the pressing member 211. The support member 221 is configured to be able to support the distal end portion 123a of the portion 123 to be a coil end from the R2 side.

Specifically, when the pressing member 211 starts to press the distal end portion 123a of the portion 123 to be a coil end, the pressing member 211 and the support member 221 are arranged in a manner that a distal end 221a of the support member 221 on the stator core 10 side is closer to the stator core 10 side than a distal end 211a of the pressing member 211 on the stator core 10 side. As illustrated in FIG. 7, the position of the support member 221 in the R direction is substantially equal to the position of the pressing member 211 in the R direction. As a result, when the distal end portion 211b of the pressing member 211 presses the distal end portion 123a of the portion 123 to be a coil end, the distal end portion 123a of the portion 123 to be a coil end is supported by the support member 221 from the R2 side.

The pressing member 211 is configured to be relatively movable in the Z direction with respect to the stator core 10 independently of the support member 221. That is, it is configured that the relative position in the Z direction can be changed between the pressing member 211 and the support member 221.

The regulating member 241 is disposed on the Z2 side of the stator core 10. As illustrated in FIG. 9, a plurality of the regulating members 241 are provided so as to radially extend from an annular regulating unit 243 toward the R2 side. The plurality of regulating members 241 are arranged at positions overlapping the plurality of teeth 12 (see FIG. 1) when viewed from the Z direction. Each of the plurality of regulating members 241 is configured to be movable in the R direction with respect to the regulating unit 243 by driving of the regulating member motor 242. That is, each of the plurality of regulating members 241 is configured to be relatively movable in the R direction with respect to the stator core 10.

As illustrated in FIG. 8, the regulating member 241 is configured to be able to regulate the movement of the portion 123 to be a coil end, which is to be bent and molded in the C direction, toward the R1 side. Specifically, when the portion 123 to be a coil end is bent and molded in the C direction, the regulating member 241 is relatively moved in the R direction with respect to the stator core 10 in a manner that an R2-side end surface 241a of each of the plurality of regulating members 241 is adjacent to the R1 side of the portion 123 to be a coil end on which the pressing member 211 is pressed against the distal end portion 123a of the portion 123 to be a coil end, when viewed from the R direction.

As illustrated in FIG. 9, the device 200 for manufacturing the stator 100 includes a scratch prevention member 261 that prevents the root portion 123b of the portion 123 to be a coil end from being scratched by a corner portion of the slot 13 when the portion 123 to be a coil end is bent and molded in the C direction. The scratch prevention member 261 is disposed on the Z2 side of the stator core 10. The scratch prevention member 261 is disposed at a position corresponding to each of the plurality of teeth 12 (see FIG. 1). The scratch prevention member 261 has a substantially triangular shape when viewed from the R direction.

### (Method for Manufacturing Stator)

A method for manufacturing the stator 100 according to the present embodiment will be described with reference to FIGS. 5 to 8 and FIGS. 9 to 16.

### (Stator Core Preparing Step)

As illustrated in FIG. 11, in step S10, a stator core preparing step is performed. The stator core preparing step (S10) is a step of preparing the stator core 10 (see FIG. 1).

### (Coil Preparing Step)

In step S20, a segment coil preparing step is performed. The segment coil preparing step (S20) is a step of preparing the segment coil 120 (see FIG. 11). Specifically, as illustrated in Fig. 11, the U-shaped segment coil 120 including a pair of leg portions 121 extending in the Z direction and a connecting portion 122 connecting the pair of leg portions 121 is prepared.

### (Insertion Step)

As illustrated in FIG. 10, in step S30, an insertion step is performed. As illustrated in FIG. 12, the insertion step (S30) is a step of inserting the plurality of segment coils 120 into the slots 13 in a manner that the portion 123 to be a coil end projects from the Z2-side end surface 10a of the stator core 10 and is arranged in the R direction in each of the plurality of slots 13 of the stator core 10. In the insertion step (S30), the connecting portion 122 of the U-shaped segment coil 120 prepared in the segment coil preparing step (S20) becomes the coil end portion 22 projecting from the stator core 10 to the Z1 side. Furthermore, each of the pair of leg portions 121 of the segment coil 120 becomes the slot housed portion 21 and the portion 123 to be a coil end.

### (Bending Step)

As illustrated in FIG. 10, in step S40, a bending step is performed. The bending step (S40) is a step of bending and molding each of the plurality of portions 123 to be coil ends along the C direction.

Specifically, the bending step (S40) is a step after the insertion step, and is a step of bending and molding the plurality (48) of portions 123 to be coil ends arranged in the circumferential direction by repeating a process in which the pressing member 211 and the support member 221 that press and bend the portion 123 to be a coil end in the circumferential direction are relatively moved in the circumferential direction and relatively moved in the axial direction with respect to the stator core 10 to bend the portion 123 to be a coil end, and then bending is shifted to bending of the next portion 123 to be a coil end adjacent to the bent portion 123 to be a coil end by the pressing member 211 and the support member 221.

In addition, the bending step (S40) includes bending and molding the plurality of portions 123 to be coil ends by relatively moving the pressing member 211 and the support member 221 (two sets), whose number is smaller than the total number (48) of the plurality of portions 123 to be coil ends arranged in the circumferential direction, in the circumferential direction and in the axial direction with respect to the stator core 10. In short, the bending step (S40) is not a step of simultaneously bending and molding all the portions 123 to be coil ends in one-to-one correspondence with all the pressing members 211 (support members 221), but a step of bending and molding some of the portions 123 to be coil ends (whose number is the same as that of the pressing members 211) in correspondence with all the pressing members 211 (support members 221).

Furthermore, the bending step includes simultaneously bending and molding the plurality (two) of portions 123 to be coil ends whose number is smaller than the total number by the plurality (two sets) of pressing members 211 and support members 221 provided at equal angular intervals (180° intervals) in the circumferential direction, whose number is smaller than the total number (48) of the plurality of portions 123 to be coil ends arranged in the circumferential direction. That is, the bending step is a step of performing bending molding by two sets of the pressing members 211 and the support members 221 facing each other with the central axis A interposed therebetween.

Moreover, the bending step includes bending and molding the plurality of portions 123 to be coil ends by repeating a process in which the pressing member 211 and the support member 221 are relatively moved in the circumferential direction and relatively moved in the axial direction with respect to the stator core 10 to bend the portion 123 to be a coil end along the circumferential direction and pass over the portion 123 to be a coil end, and then bending is shifted to bending of the next portion 123 to be a coil end adjacent to the bent portion 123 to be a coil end by the pressing member 211 and the support member 221. In short, in the bending step, bending molding of the plurality of portions 123 to be coil ends adjacent to each other is continuously performed by the pressing member 211 and the support member 221.

Specifically, the bending step includes bending the plurality of portions 123 to be coil ends by repeating a process in which the pressing member 211 and the support member 221 are relatively moved in the circumferential direction and relatively moved in the axial direction (relatively moved simultaneously in the circumferential direction and the axial direction) with respect to the stator core 10 to bend the portion 123 to be a coil end along the circumferential direction and pass over the portion 123 to be a coil end, and then bending is shifted to bending of the next portion 123 to be a coil end adjacent to the bent portion 123 to be a coil end by the pressing member 211 and the support member 221. More specifically, the bending step is configured that the pressing member 211 and the support member 221 are moved on a spiral track slightly inclined with respect to the direction orthogonal to the axial direction to be gradually brought close to the stator core 10.

Furthermore, the bending step includes bending and molding the plurality of portions 123 to be coil ends by turning the pressing member 211 and the support member 221 in the circumferential direction of the stator core 10 a plurality of times (for example, 20 turns) to gradually increase the bending angle θ (see FIG. 7) of the portion 123 to be a coil end with respect to the axial direction. At this time, bending molding is performed by the pressing member 211 and the support member 221 in a manner that the bent portion 123 to be a coil end does not come into contact with the next portion 123 to be a coil end adjacent in the circumferential direction.

The bending step is performed on each row of the portions 123 to be coil ends arranged in the radial direction with the axial moving speed of the pressing member 211 set to substantially zero (including zero) in a manner that in the final stage in which bending molding is completed, the bending angles θ (see FIG. 7) of the plurality of portions 123 to be coil ends arranged in the circumferential direction are the same.

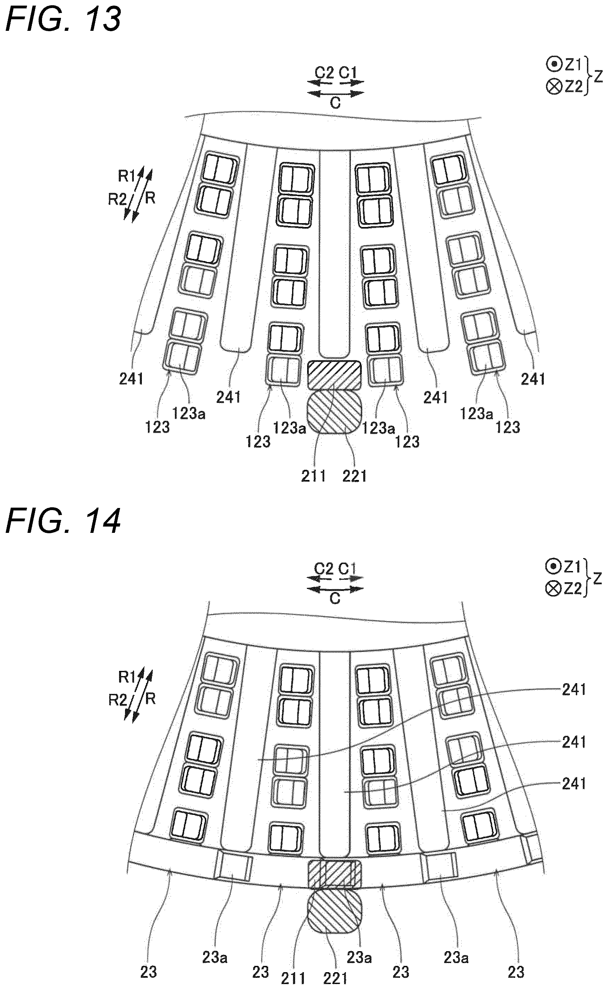

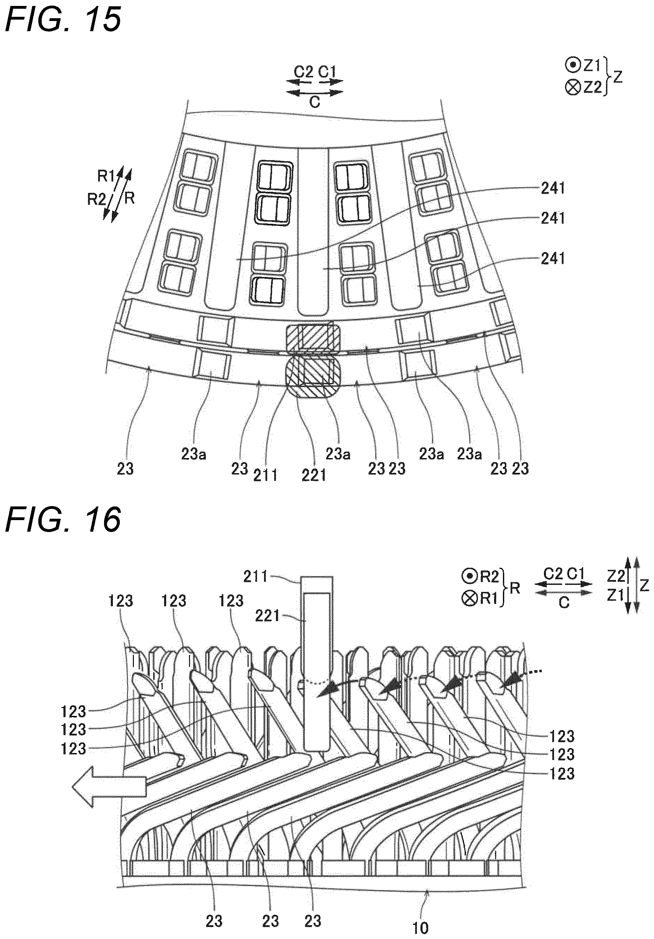

As illustrated in FIGS. 13 and 14, bending molding of the portion 123 to be a coil end in the C direction is first performed on a plurality of portions 123 to be a first row (outermost peripheral row) of a plurality of coil end portions 23 arranged in the circumferential direction. As illustrated in FIGS. 15 and 16, bending molding of the portion 123 to be a coil end in the C direction is then performed on the plurality of portions 123 to be a second row (row on an inner side in the radial direction by one row from the outermost peripheral row) of the plurality of coil end portions 23 arranged in the circumferential direction. Thereafter, bending molding of the portion 123 to be a coil end in the C direction is sequentially performed on each row toward the R1 side.

### (Segment Coil Joining Step)

As illustrated in Fig. 10, in step S50, a segment coil joining step is performed. The segment coil joining step (S50) is a step of joining the segment coils 20a (see FIG. 2) to each other. Specifically, as illustrated in FIG. 2, each of the distal end portions 23a of the coil end portions 23 is joined (connected) to the distal end portion 23a of the coil end portion 23 of the other segment coil 20a by welding on the Z2 side of the stator core 10.

In the above flow, the order of the stator core preparing step (S10) and the segment coil preparing step (S20) may be changed.

### (Effects of Embodiment)

In the present embodiment, the following effects can be obtained.

### (Effects of Method for Manufacturing Stator)

As described above, the method for manufacturing the stator 100 according to the present embodiment includes a bending step of bending and molding a plurality of portions 123 to be coil ends arranged in the circumferential direction by repeating a process in which the pressing member 211 and the support member 221 that press and bend the portion 123 to be a coil end along the circumferential direction are relatively moved in the circumferential direction and relatively moved in the axial direction with respect to the stator core 10 to bend the portion 123 to be a coil end, and then bending is shifted to bending of the next portion 123 to be a coil end adjacent to the bent portion 123 to be a coil end by the pressing member 211 and the support member 221. As a result, the process in which after the portion 123 to be a coil end is bent, bending is shifted to bending of the next portion 123 to be a coil end adjacent to the bent portion 123 to be a coil end by the pressing member 211 and the support member 221 is repeated, so that the plurality of portions 123 to be coil ends can be bent and molded by one set (one) of the pressing member 211 and the support member 221. Therefore, it is not necessary to collectively bending and molding a plurality of portions to be coil ends as in the conventional case, and rigidity required for a device (manufacturing device 200) for bending and molding the portion 123 to be a coil end can be reduced. In addition, since the plurality of portions 123 to be coil ends adjacent to each other can be bent and molded by one set (one) of the pressing member 211 and the support member 221, the portions 123 to be coil ends arranged in the circumferential direction can be bent and molded without providing the same number of the pressing members 211 and the support members 221 as the total number of the portions 123 to be coil ends arranged in the circumferential direction. Therefore, when the diameter of the stator 100 to be manufactured is reduced, it is not necessary to consider interference between the adjacent pressing members 211 and between the adjacent support members 221 as in the conventional case. As a result, it is possible to suppress the size of the device (manufacturing device 200) for bending and molding the portion 123 to be a coil end and to sufficiently handle the reduction in the diameter of the stator 100.

In the method for manufacturing the stator 100 according to the present embodiment, as described above, the bending step includes bending and molding the plurality of portions 123 to be coil ends by relatively moving the pressing member 211 and the support member 221, whose number is smaller than the total number of the plurality of portions 123 to be coil ends arranged in the circumferential direction, in the circumferential direction with respect to the stator core 10 and relatively moving the pressing member and the support member in the axial direction. As a result, since bending molding is performed by the pressing member 211 and the support member 221 whose number is smaller than the total number of the plurality of portions 123 to be coil ends arranged in the circumferential direction, all the portions 123 to be coil ends are not simultaneously bent, and the rigidity required for the device (manufacturing device 200) for bending and molding the portion 123 to be a coil end can be effectively reduced. Therefore, the size of the device (manufacturing device 200) for bending and molding the portion 123 to be a coil end can be effectively suppressed. In addition, for example, in a case where two sets (two) of the pressing members 211 and the support members 221 are provided at an angular interval of 180° in the circumferential direction, a large interval between the two sets (two) of the pressing members 211 and the support members 221 can be ensured, so that it is possible to suppress interference between the pressing member 211 and the support member 221, and it is also possible to increase rigidity by manufacturing the pressing member 211 and the support member 221 thick. As a result, it is possible to more reliably handle the reduction in the diameter of the stator 100.

In the method for manufacturing the stator 100 according to the present embodiment, as described above, the bending step includes bending and molding the plurality of portions 123 to be coil ends by repeating a process in which the pressing member 211 and the support member 221 are relatively moved in the circumferential direction and relatively moved in the axial direction with respect to the stator core 10 to bend the portion 123 to be a coil end along the circumferential direction and pass over the portion 123 to be a coil end, and then bending is shifted to bending of the next portion 123 to be a coil end adjacent to the bent portion 123 to be a coil end by the pressing member 211 and the support member 221. As a result, for example, as compared with a case where, after bending one portion to be a coil end, the pressing member and the support member are temporarily retracted in the axial direction away from the stator core without passing over the one portion to be a coil end, and then bending is shifted to bending to the next adjacent portion to be coil end, the pressing member and the support member can bend the portion 123 to be a coil end along the circumferential direction while passing over the portion 123 to be a coil end, so that it is possible to continuously and efficiently bend a plurality of portions 123 to be coil ends adjacent to each other in the circumferential direction.

In the method for manufacturing the stator 100 according to the present embodiment, as described above, the bending step includes bending and molding the plurality of portions 123 to be coil ends in a spiral manner by relatively moving the pressing member 211 and the support member 221 simultaneously in the circumferential direction and the axial direction with respect to the stator core 10 and causing the pressing member and the support member to pass over the portion 123 to be a coil end. As a result, only by setting the circumferential speed of the pressing member 211 and the support member 221 and the axial speed of the pressing member 211 and the support member 221, the pressing member 211 and the support member 221 can be moved in a spiral manner to easily bend and mold the plurality of portions 123 to be coil ends.

In the method for manufacturing the stator 100 according to the present embodiment, as described above, the bending step includes bending and molding the plurality of portions 123 to be coil ends by turning the pressing member 211 and the support member 221 in the circumferential direction of the stator core 10 a plurality of times to gradually increase the bending angle θ of the portion 123 to be a coil end with respect to the axial direction. As a result, bending molding of each portion 123 to be a coil end can be performed a plurality of times, and the bending angle θ due to one press of the pressing member 211 and the support member 221 against the portion 123 to be a coil end can be reduced. Therefore, it is possible to prevent the bent portion 123 to be a coil end from interfering with the next adjacent portion 123 to be a coil end.

In the method for manufacturing the stator 100 according to the present embodiment, as described above, the bending step includes simultaneously bending and molding the plurality of the portions 123 to be coil ends whose number is smaller than the total number of the portions 123 to be coil ends arranged in the circumferential direction by the pressing members 211 and the support members 221 provided in plural at equal angular intervals in the circumferential direction, whose number is smaller than the total number. As a result, as compared with a case where there is only one set (one) of the pressing member 211 and the support member 221, more portions 123 to be coil ends can be bent and molded simultaneously, so that the plurality of portions 123 to be coil ends can be efficiently bent and molded.

### (Effects of Method for Manufacturing Stator)

The device 200 for manufacturing the stator 100 according to the present embodiment includes the moving mechanism 200a that bends and molds the plurality of portions 123 to be coil ends arranged in the circumferential direction by repeating a process in which the pressing member 211 and the support member 221 are relatively moved in the circumferential direction with respect to the stator core 10 and relatively moved in the axial direction of the stator core 10 to bend the portion 123 to be a coil end, and then bending is shifted to bending of the next portion 123 to be a coil end adjacent to the bent portion 123 to be a coil end by the pressing member 211 and the support member 221, and the number of the pressing members 211 and the support members 221 provided is smaller than the total number of the plurality of portions 123 to be coil ends arranged in the circumferential direction. As a result, the process in which after the portion 123 to be a coil end is bent, bending is shifted to bending of the next portion 123 to be a coil end adjacent to the bent portion 123 to be a coil end by the pressing member 211 and the support member 221 is repeated, so that the plurality of portions 123 to be coil ends can be bent and molded by one set (one) of the pressing member 211 and the support member 221. Therefore, it is not necessary to collectively bending and molding a plurality of portions to be coil ends as in the conventional case, and rigidity required for a device (manufacturing device 200) for bending and molding the portion 123 to be a coil end can be reduced. In addition, since the plurality of portions 123 to be coil ends adjacent to each other can be bent and molded by one set (one) of the pressing member 211 and the support member 221, the portions 123 to be coil ends arranged in the circumferential direction can be bent and molded without providing the same number of the pressing members 211 and the support members 221 as the total number of the portions 123 to be coil ends arranged in the circumferential direction. Therefore, when the diameter of the stator 100 to be manufactured is reduced, it is not necessary to consider interference between the adjacent pressing members 211 and between the adjacent support members 221 as in the conventional case. As a result, it is possible to suppress the size of the device (manufacturing device 200) for bending and molding the portion 123 to be a coil end and to sufficiently handle the reduction in the diameter of the stator 100.

### (Modifications)

It should be understood that the embodiment disclosed herein is illustrative in all respects and is not restrictive. The scope of the present invention is defined not by the description of the above embodiment but by the claims, and further includes meanings equivalent to the claims and all changes (modifications) within the scope.

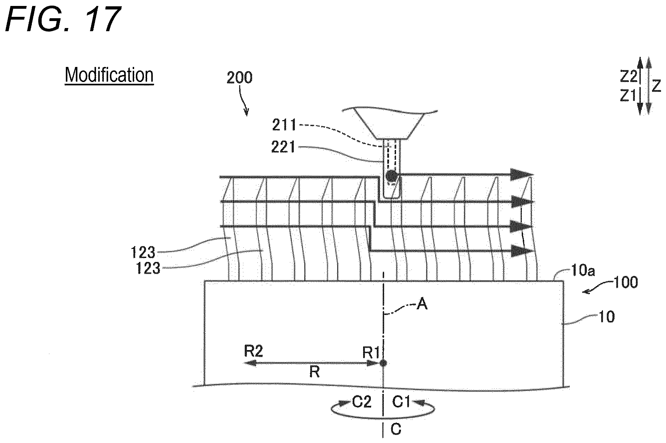

For example, in the embodiment, an example has been described in which the pressing member and the support member as the bending members of the present invention are simultaneously moved in the axial direction and the circumferential direction in the bending step, but the present invention is not limited thereto. In the present invention, as in a device 300 for manufacturing the stator 100 illustrated in FIG. 17, the bending step may include bending and molding the plurality of portions 123 to be coil ends by alternately repeating the relative movement of the pressing member 211 and the support member 221 only in the circumferential direction with respect to the stator core 10 and the relative movement thereof only in the axial direction with respect to the stator core. In this case, for example, when the manufacturing device 300 includes two sets of the pressing members 211 and the support members 221 arranged at 180° in the circumferential direction, the relative movement is switched to the relative movement in the axial direction after the relative movement is performed only in the circumferential direction continuously by at least 180° or more. With such a configuration, the plurality of portions 123 to be coil ends arranged in the circumferential direction can be bent and molded by the pressing member 211 and the support member 221 in a state where the positions of the pressing member 211 and the support member 221 in the axial direction are held. Therefore, the bending amounts of the plurality of portions 123 to be coil ends can be made uniform by the pressing member 211 and the support member 221.

In the embodiment, an example in which the motor is provided on the pressing member (support member) side in order to relatively move the pressing member (support member) in the axial direction with respect to the stator core has been described, but the present invention is not limited thereto. In the present invention, a motor may be provided on the stator core side in order to relatively move the pressing member (support member) in the axial direction with respect to the stator core.

Furthermore, in the embodiment, an example in which the motor is provided on the stator core side in order to relatively move the pressing member (support member) in the circumferential direction with respect to the stator core has been described, but the present invention is not limited thereto. In the present invention, a motor may be provided on the pressing member (support member) side in order to relatively move the pressing member (support member) in the circumferential direction with respect to the stator core.

Moreover, in the embodiment, an example in which two bending members (a set of the pressing member and the support member) of the present invention are provided has been described, but the present invention is not limited thereto. In the present invention, one bending member or three or more bending members may be provided. Here, the maximum number of the bending members is set to be smaller than the total number of the portions to be coil ends arranged in the circumferential direction.

Furthermore, in the embodiment, an example in which the bending member of the present invention is constituted by two members, that is, separated pressing member and support member has been described, but the present invention is not limited thereto. In the present invention, the bending member may be constituted by one member. That is, the pressing member and the support member may be integrally configured.

Furthermore, in the embodiment, an example has been described in which the device for manufacturing a stator is configured to be able to simultaneously manufacture two stators, but the present invention is not limited thereto. In the present invention, the device for manufacturing a stator may be configured to be able to manufacture only one stator or to simultaneously manufacture three or more stators.

In the embodiment, an example has been described in which the bending member (the pressing member and the support member) of the present invention is relatively moved in the circumferential direction and relatively moved in the axial direction with respect to the stator core to bend the portion to be a coil end along the circumferential direction and pass over the portion to be a coil end, but the present invention is not limited thereto. In the present invention, instead of the portion to be a coil end being passed over, for example, after one portion to be a coil end is bent while the bending member is kept in contact with only a predetermined portion of the one portion to be a coil end, the bending member may be temporarily retracted in the axial direction away from the stator core without passing over the one portion to be a coil end, and then bending may be shifted to bending of the next adjacent portion to be a coil end.

Moreover, in the embodiment, an example in which a plurality of the bending members (the pressing member and the support member) of the present invention are arranged at equal angular intervals in the circumferential direction has been described, but the present invention is not limited thereto. In the present invention, the bending members does not need to be arranged at equal angular intervals in the circumferential direction.

Furthermore, in the embodiment, an example in which the bending member (the pressing member and the support member) of the present invention turns in the circumferential direction of the stator core 20 turns has been described, but the present invention is not limited thereto. In the present invention, the bending members (the pressing member and the support member) may turn in the circumferential direction of the stator core a number of times different from 20 turns.

### REFERENCE SIGNS LIST

10: Stator core, 10a: End surface (of the stator core in the axial direction), 13: Slot, 23: Coil end portion, 100: Stator, 120: Segment coil, 123: Portion to be a coil end, 200, 300: Device for manufacturing a stator, 200a: Moving mechanism, 211: Pressing member (bending member), 221: Support member (bending member), and θ: Bending angle (of the portion to be a coil end with respect to the axial direction).

## Claims

1. A method for manufacturing a stator comprising: an insertion step of inserting a plurality of segment coils into slots of a stator core so as to project a portion to be a coil end, which becomes a coil end portion, from an end surface of the stator core in an axial direction and to arrange a plurality of the portions to be coil ends in a circumferential direction of the stator core; and a bending step of performing, after the insertion step, bending molding of the plurality of portions to be coil ends arranged in the circumferential direction by repeating a process in which a bending member that presses and bends the portion to be a coil end along the circumferential direction is relatively moved in the circumferential direction with respect to the stator core and relatively moved in the axial direction to bend the portion to be a coil end, and then bending is shifted to bending of a next portion to be a coil end adjacent to the portion to be a coil end, which has been bent, by the bending member.

2. The method for manufacturing a stator according to claim 1, wherein the bending step includes performing the bending molding of the plurality of portions to be coil ends by relatively moving the bending member, whose number is smaller than a total number of the plurality of portions to be coil ends arranged in the circumferential direction, in the circumferential direction with respect to the stator core and relatively moving the bending member in the axial direction.

3. The method for manufacturing a stator according to claim 1, wherein the bending step includes performing the bending molding of the plurality of portions to be coil ends by repeating a process in which the bending member is relatively moved in the circumferential direction with respect to the stator core and relatively moved in the axial direction to bend the portion to be a coil end along the circumferential direction and pass over the portion to be a coil end, and then bending is shifted to bending of a next portion to be a coil end adjacent to the portion to be a coil end, which has been bent, by the bending member.

4. The method for manufacturing a stator according to claim 3, wherein the bending step includes performing the bending molding of the plurality of portions to be coil ends in a spiral manner by relatively moving the bending member simultaneously in the circumferential direction and the axial direction with respect to the stator core and causing the bending member to pass over the portion to be a coil end.

5. The method for manufacturing a stator according to claim 1, wherein the bending step includes performing the bending molding of the plurality of portions to be coil ends by turning the bending member in the circumferential direction of the stator core a plurality of times and gradually increasing a bending angle of the portion to be a coil end with respect to the axial direction.

6. The method for manufacturing a stator according to claim 2, wherein the bending step includes simultaneously performing the bending molding of the plurality of portions to be coil ends, whose number is smaller than a total number of the plurality of portions to be coil ends arranged in the circumferential direction, by the bending member provided in plural at equal angular intervals in the circumferential direction, whose number is smaller than the total number.

7. A device for manufacturing a stator comprising: a bending member that presses and bends a plurality of portions to be coil ends, which become a plurality of coil end portions, arranged in a circumferential direction of a stator core along the circumferential direction; and a moving mechanism that performs bending molding of the plurality of portions to be coil ends arranged in the circumferential direction by repeating a process in which the bending member is relatively moved in the circumferential direction with respect to the stator core and relatively moved in the axial direction of the stator core to bend the portion to be a coil end, and then bending is shifted to bending of a next portion to be a coil end adjacent to the portion to be a coil end, which has been bent, by the bending member, wherein a number of the bending members provided is smaller than a total number of the plurality of portions to be coil ends arranged in the circumferential direction.
